# EUROPEAN PATENT SPECIFICATION

(11) **EP 2 070 198 B1**
(45) Date of publication and mention of the grant of the patent: **10.08.2011**
(21) Application number: 07839133.1
(22) Date of filing: 01.10.2007
(51) Int. Cl.: H04B 1/52, G06K 7/00

(54) **RADIO FREQUENCY IDENTIFICATION READER HAVING A SIGNAL CANCELLER AND METHOD THEREOF**
FUNKFREQUENZIDENTIFIKATIONS-LESEGERÄT MIT EINEM SIGNALUNTERDRÜCKER UND VERFAHREN DAFÜR
LECTEUR D'IDENTIFICATION RADIOFRÉQUENCE À SYSTÈME D'ANNULATION DE SIGNAL

(30) Priority: 29.09.2006 US 848219 P; 09.05.2007 US 801216
(43) Date of publication of application: 17.06.2009
(73) Proprietor: Sensormatic Electronics, LLC, Boca Raton, FL 33486 (US)
(72) Inventor: ALICOT, Jorge, F., Davie, FL 33331 (US); DEVOE, Ronald, F., Miami, FL 33147 (US)
(74) Representative: Hafner, Dieter
(86) International application number: PCT/US2007/021147
(87) International publication number: WO 2008/042365

(56) References cited:
- EP-A- 0 831 594
- WO-A-00/21204
- WO-A-2005/109500
- WO-A-2006/037241
- US-A1- 2005 084 003
- US-A1- 2006 098 765
- US-A1- 2006 183 454
- US-B1- 6 192 222

## Description

### FIELD OF THE INTENTION

The present ,invention relates to the field of radio frequency identification ("RFID") circuits and methodologies, and more particularly to a method for a RPTD reader having an accurate sensing circuit and a signal canceller.

### BACKGROUND OF THE INVENTION

Radio frequency identification ("RFID") systems are used in a wide variety of applications; and provide convenient mechanisms for the tracking, identification, and authentication of persons or objects. A RFID system typically includes one or more readers (also commonly referred to as interrogators) deployed at selected locations in an installation. Readers are typically deployed where it is desired to control or to receive information about objects or persons bearing or associated with RFID tags (also commonly referred to as markers or transponders). For example, readers may be deployed so as to cover entrances and exits, inventory control points, transaction terminals, and the like, Each reader is capable of receiving information from RFID tags with each tag typically being associated with an object or person. A tag may be affixed to or embedded in an object with which it is associated, or be part of a badge, card, or token given to a person. Signals conveyed between the tag and the reader, allow the reader to sense information on the tag. This information may include, for example, authentication or identification information, or may include instructions, such as a sequence of processes or operations to be conducted upon an object bearing the tag.

Each tag may include stored information that is communicated wirelessly to the reader. Tags typically carry information in onboard memory such as read only memory ("ROM") or nonvolatile programmable memory such as electrically erasable programmable read only memory ("EEPROM") and the amount of information may range from a single bit to kilobits or even more. Single bit tags typically serve as surveillance devices, such as theft prevention tags. Information amounting to a few bits or tens of bits may serve as an identifier, such as may be found in a badge or smart card, while information amounting to kilobits may comprise a portable data file that can be used for identification, communication, or control. The reader may, for example, extract information from a tag and use it for identification, or may store or convey the information to a responsible party. Alternatively, a data file may include a set of instructions that may initiate or control processes or actions without recourse to, or in coordination with, information stored elsewhere.

A tag typically includes a wireless communication device, for example a transmitter or transponder, which is capable of wirelessly communicating stored information to the reader. The tag may communicate the information independently or in response to a signal, such as an interrogation signal, received from the reader. Both active and passive tags are known in the art. An active tag has an onboard power source, while a passive tag may operate without an internal power source, deriving its operating power from a field generated by the reader. Passive tags are much lighter and less expensive than active tags and may offer a virtually unlimited operational lifetime. However, passive tags typically have shorter read ranges than active tags and require a higher powered reader. Passive tags are also constrained in their capacity to store data and their ability to perform well in electromagnetically noisy environments.

A passive tag typically includes memory, which may be read only memory ("ROM") nonvolatile programmable memory such as electrically erasable programmable read only memory ("EEPROM"), or random access memory ("RAM"), depending on the applications to which the tag is to be put. Programmable memory used by a passive tag should be nonvolatile, so that data is not lost when the tag is in a powered down state. When the tag is not actively communicating with the reader, the tag is in a powered down state.

One commonly used implementation of a passive RFID tag includes analog or digital circuitry for processing signals received from and sent to the reader, as well as a antenna for communicating with a compatible reader, for example by electromagnetic coupling. The antenna may also be referred to as a coil. Communication through electromagnetic coupling typically involves superimposing the data upon a-rhythmically varying field or carrier wave, which is, using the data to modulate the carrier wave. The carrier wave may suitably be a sinusoidal wave.

In order to receive data from a passive tag or transponder that communicates through electromagnetic coupling, the reader generates a magnetic field, typically using a reader antenna that electromagnetically couples to the transponder antenna. The magnetic field induces a voltage in the transponder antenna, thereby supplying power to the transponder. Data may suitably be transmitted to the reader by changing one parameter of the transmitting field. This parameter may be amplitude, frequency or phase.

The passive tag communicates with the reader by changing the load on the transmitting field. Load changes may suitably affect either the amplitude or phase of the field. These changes to the field are sensed by the reader antenna, which produces a modulated current in response to the field. This current is analyzed, for example, demodulated, to extract the data, which is then used in ways called for by the design of the particular RFID system.

Typical prior art readers may employ a single antenna to generate an electromagnetic ("EM") field, to transmit data and to receive data from the RFID transponder ("tag"). If a single antenna is used, it must be properly tuned to the operational frequency. When a single antenna or coil is used for transmission and reception of the RF signals, there arises the potential for significant interference between the transmit section and the receive section of the RPID reader. Even when separate transmission and reception antennas are used, due to saturation caused by the transmission antenna, there arises the potential for significant interference between the transmit section and the receive section of the RFID reader.

WO 00/21204 discloses a system for suppressing RF signals transmitted by a transmitter from the RF signals received by a receiver. The RF signals transmitted by a transmitter are sampled by a coupler of the system. The RF signals are then applied to a modulator which adjusts the signals from the transmitter to have an equal frequency and amplitude as the RF signals from the transmitter as well as an opposite phase. The modulated signal is applied to the REF signals received by a receiver antenna; The modulated signals and signals from the transmitter cancel out which eliminates transmitter signals in the received signal. The resulting signal is monitored to determine the noise signals remaining in the received signal and the modulator is adjusted to minimize the noise signals.

WO 2005/109500 discloses a system providing sensitivity enhancement for a single antenna RFID interrogating device by separately coupling a nulling signal formed using a portion of a transmit signal into a receiver. The phase and amplitude of nulling signal can be adjusted so that the nulling signal cancels that a reflected transmit signal from the antenna, resulting in the small backscattered signal from the distant RFID tag to be more easily detected.

CTS 6,192,222' discloses backscatter communication systems, interrogators, methods of communicating in a backscatter system, and backscatter communication methods. A backscatter system includes an interrogator including a transmitter configured to output a forward link communication and a receiver configured to receive a return link communication having a carrier signal, the receiver being configured to reduce the amplitude of the carrier signal of the return link communication.

US 2006/0183454 discloses systems and methods for adaptive cancellation of carrier content which include receiving a signal, adaptively detecting an amount of carrier content in the received signal, generating a feedback signal for canceling out the carrier content in the incoming signal, and introducing the feedback signal for canceling out a majority of carrier content in the signal being received.

There exists, therefore, a need for a method that provides a RFID reader having an accurate sensing circuit,

### SUMMARY OF THE INVENTION

In accordance with one aspect, the present invention provides a method generating a cancellation, signal for isolating a transmit section and a receive section of a RFID reader, the method including generating a local reference signal from a broadcast transmit signal, receiving a receive signal from a remote device, determining at least one signal correction factor, e.g., an amplitude correction factor, and generating the cancellation signal by applying the at least one correction factor to the local reference signal. The method further includes combining the cancellation signal and the receive signal to minimize or cancel out interference and noise on the receive signal, and determining at least one signal correction factor includes determining one of an amplitude correction factor and a phase correction factor by using a digital signal processor (216) to execute an error minimization process and providing a detector circuit (218) positioned in the receive part between a summer (220) and a signal processor (216) to measure the amplitude and phase of the local reference signal and the reflected receive signal and report this information to signal processor (216).

### BRIEF DESCRIPTION OF THE DRAWINGS

A more complete understanding of the present invention, and the attendant advantages and features thereof, will be more readily understood by reference to the following detailed description when considered in conjunction with the accompanying drawings, wherein like designations refer to like elements, and wherein:
FIG. 1 is a block diagram of a communication system constructed in accordance with the principles of the present invention;
FIG. 2 is a block diagram of various aspects of the communication system of FIG. 1 constructed in accordance with the principles of the present invention;
FIG. 3 is a block diagram of an RFID reader constructed in accordance with the principles of the present invention; and
FIG. 4 is a flowchart of a signal canceller process in accordance with the principles of the present invention.

### DETAILED DESCRIPTION OF THE INVENTION

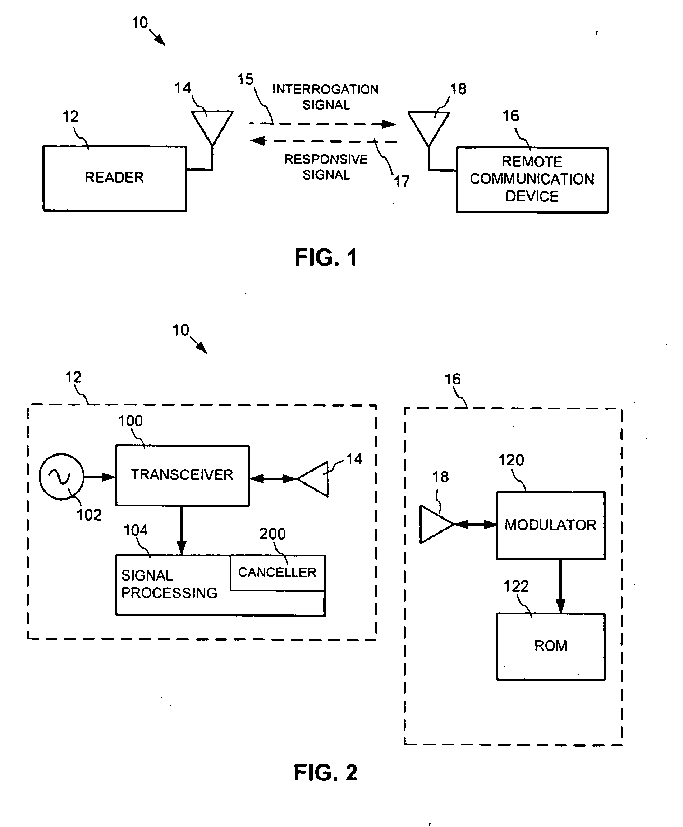

Referring now to the drawing figures in which like reference designators refer to like elements, there is shown in FIG. 1 a diagram of an exemplary communication system constructed in accordance with the principles of the present invention and designated generally as "10". Communication system 10 provides an electronic identification system in the embodiment described herein. Further, the described communication system 10 is configured for backscatter communications as described in detail below. Other communication protocols can be utilized in other embodiments.

The depicted communication system 10 includes at least one electronic wireless remote communication device 16 and a reader 12. Radio frequency communications can occur between remote communication devices 16 and reader 12 for use in identification systems and product monitoring systems as exemplary applications.

Devices 16 include radio frequency identification ("RFID") devices in the embodiments described herein. Multiple wireless remote communication devices 16 typically communicate with reader 12 although only one such device 16 is illustrated in FIG. 1.

Although multiple communication devices 16 can be employed in communication system 10, there is typically no communication between multiple devices 16 themselves. Instead, the multiple communication devices 16 communicate with reader 12. Multiple communication devices 16 can be used in the same field of reader 12 i.e., within the communications range of reader 12. Similarly, multiple readers 12 can be in proximity to one or more of devices 16.

Remote communication device 16 is configured to interface with reader 12 using a wireless medium in one embodiment. More specifically, communication between communication device 16 and reader 12 occur via an electromagnetic link, such as an RF link e.g., at microwave frequencies in the described embodiment. Reader 12 is configured to output forward link wireless communication signals 15. Further, reader 12 is operable to receive return link wireless communication signals 17 e.g., a reply signal from devices 16 responsive to the outputting of forward link communication signals 15. In accordance with the above, forward link communication signals and return link communication signals are wireless signals, such as radio frequency signals. Other forms of electromagnetic communication signals, such as infrared, acoustic, and the like are possible.

Reader unit 12 includes at least one antenna 14 as well as transmitting and receiving circuitry, similar to that implemented in devices 16. Antenna 14 comprises a transmit/receive antenna connected to reader 12. In an alternative embodiment, reader 12 can have separate transmit and receive antennas.

In operation, reader 12 transmits a forward link communication signal 15 e.g., an interrogation command signal via antenna 14. Communication device 16 is operable to receive the incoming forward link signal 15. Upon receiving signal 15, communication device 16 is operable to respond by communicating the responsive return link communication signal 17 e.g., a responsive reply signal. Communications of system 10 are described in greater detail below.

In one embodiment, responsive return link communication signal 17 e.g., a responsive reply signal is encoded with information that uniquely identifies, or labels the particular device 16 that is transmitting, so as to identify any object, animal, or person with which communication device 16 is associated. Communication devices 16 can be RFID tags that are attached to objects or people where each tag is programmed with information relating to the object or person to which it is attached. The information may take a wide variety of forms and may be more or less detailed depending on the needs to be served by the information. For example, the information may include merchandise identification information, such as a universal product code. A tag may include identifying information and security clearance information for an authorized person to whom the tag has been issued. A tag may also have a unique serial number, in order to uniquely identify an associated object or person. Alternatively, a tag may include more detailed information relating to an object or person, such as a complete description of the object or person. As a further exemplary alternative, a tag may store a single bit, in order to provide for theft control or simple tracking of entry and departure through the detection of an object or person at a particular reader, without necessarily specifically identifying the object or person.

More specifically, remote device 16 is configured to output an identification signal within reply link communication 17 responsive to receiving forward link wireless communication 15. Reader 12 is configured to receive and recognize the identification signal within the reply link communication signal 17 e.g., return signal. The identification signal can be utilized to identify the particular transmitting communication device 16.

An exemplary embodiment of a reader 12 is explained with reference to FIG. 2. In this embodiment, a radio signal source 102 for synthesizing radio frequency ("RF") signals, e.g., an interrogating RF signal, outputs a RF signal to transceiver 100 of a reader generally indicated as 12. The interrogating RF signal from the source 102 has a suitable frequency such as 915 MHz. When the radio signal source 102 is energized, transceiver 100 transmits the interrogating RF signal (typically after the RF signal has been modulated with an information signal) through antenna 14 to a suitable antenna 18 (such as a dipole antenna) at a communication device 16. Communication device 16 is associated with an object (not shown) and is used to identify the object.

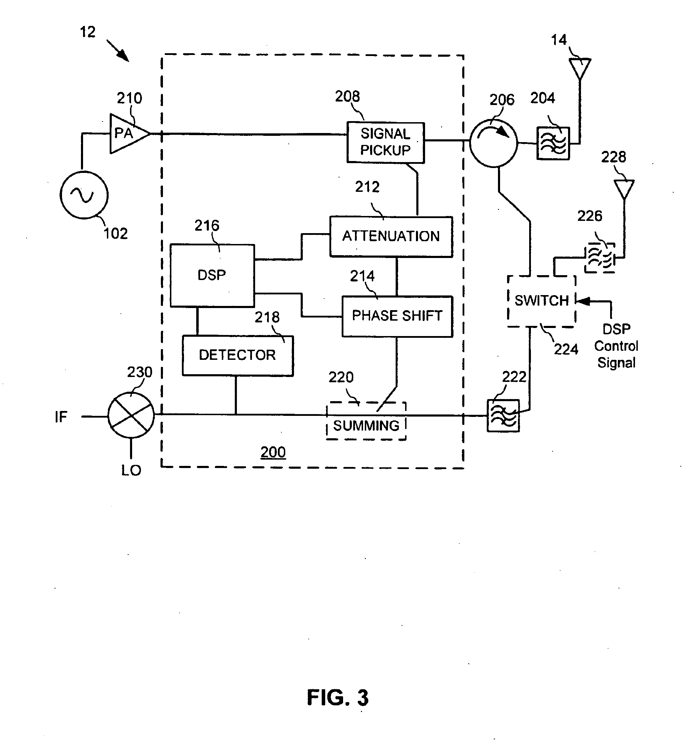

Reader 12 can further include a signal processing module 104 configurable to process modulated signals received from communication device 16, which are received by antenna 14 and passed to transceiver 100. Signal processing module 104 can include a canceller module 200 configured to generate a cancellation signal to minimize or "zero out" the interference and/or noise of a reflected receive signal is described with greater detail with reference to FIG. 3. In one embodiment, signal processing module 104 produces signals in a sequence having a pattern identifying the pattern of the 1's and 0's in read only memory ("ROM") 122 of communication device 16. For example, the received and processed sequence may be compared in reader 12 with a desired sequence to determine whether the object being identified is being sought by the reader or not.

Continuing to refer to FIG. 2, one embodiment of remote communication device 16 is explained. The depicted communication device 16 includes a modulator 120 having a receiver/transmitter as described below and a data source such as ROM 122, which provides a sequence of binary 1's and binary 0's in an individual pattern to identify the object. In this embodiment, a binary "1" in ROM 122 causes a modulator 120 to produce a first plurality of signal cycles and a binary "0" in the read only memory 122 causes the modulator 120 to produce a second plurality of signal cycles different from the first plurality of signals. The pluralities of signals cycles sequentially produced by the modulator 120 to represent the pattern of binary 1's and binary 0's which identify the object are introduced to the dipole antenna 18 for transmission to antenna 14 at reader 12. In another embodiment, the communication device 16 can have separate receive and transmit antennas.

Communication device 16 may further include an optional power source (not shown) connected to modulator 120 to supply operational power to modulator 120.

FIG. 3 illustrates the front end of an exemplary RFID reader 12 in accordance with the present invention, which may suitably be employed as readers 12 of FIGS. 1 and 2. It should be noted that the reader 12 illustrated in FIG. 3 is an exemplary reader 12 that is used in a typical RFID interrogation system of the present invention and the invention disclosed herein is not limited to a particular design or type of RFID reader 12. Reader 12 includes a canceller module 200, a RF source 102 that supplies a broadcast transmit signal, also referred to as an interrogating signal, e.g., a RF wireless continuous wave signal, to antenna 14 via a transmit section/path. The transmit section/path can include power amplifier 210, signal pick-up component 208, optional circulator 206 and bandpass filter 204.

When the antenna 14 of reader 12 is configured as a transceiver i.e., mono-static antenna, which is where a single antenna is used to both transmit and receive communication signals, for example radio frequency signals, the potential for interference between the transmit section signals of the reader 12 and the receive section signals of the reader 12 is very high. In this embodiment, antenna 14 emits or broadcasts electromagnetic radio frequency interrogation signals throughout an interrogation zone to create an electromagnetic field. The electromagnetic field produced by antenna 14 can be constantly present in instances where one or more remote communication devices 16 are present. If constant interrogation is not needed, the electromagnetic field can be activated intermittently. The electromagnetic field of interrogation signals established by antenna 14 stimulates a response from the interrogated remote communication devices 16. Further, a portion of RF energy emitted by antenna 14 is reflected back to the receiving module within reader 12 or the transceiver module of antenna 14 (or the receive module of optional antenna 228 when separate transmit and receive antennas are deployed). Thus, at antenna 14, a cumulative magnitude of RF energy reflected back from remote communication devices 16 is detected.

In another embodiment, separate antennas may be used in the transmit section/path and the receive section/path, such as antennas 14 and 228 respectively. Even when separate antennas are used to transmit the RF signals, the RF signal broadcast via transmit antenna 14 can saturate the front end of the receive section, such as antenna 228, to desensitize the receive section and thereby reduce the quality of wireless communications of reader 12 with remote communication device 16.

Optional circulator 206 is of the type commonly known in the art, and assists in directing the transmitted and received RF signals to and from antenna 14. More specifically, circulator 206 will separate the transmitted and received RF signals, which provides a degree of isolation between the transmit section/path and the receive section/path of reader 12. However, due to non-ideal circumstances, a portion of the transmit signal leaks or flows into the receive section/path of the reader 12. In one embodiment where antenna 14 operates to transmit and receive communication signals, optional circulator 206 is configured to separate signals based on the direction of the signal propagation. Although optional circulator 206 is shown as being separate from signal pick-up component 208, those skilled in the art will recognize that it can be integrated into a single component or module and made part of signal canceller module 200.

In another embodiment, an optional switch 224 can be used to connect an optional antenna 228 to the reader 12. Switch 224 provides for the routing of signals received by antenna 228 to the canceller module 200 for processing and error correction. In addition, an optional band pass filter 226 is coupled to antenna 228 to filter or eliminate out-of-base noise on the signals received by antenna 228.

As shown in FIG. 3, a signal canceller module 200 is provided to improve isolation between the transmit section/path and the receive section/path of reader 12. Canceller module 200 includes a signal pickup 208, e.g., a coupler, splitter or other similar device, which is positioned between optional circulator 206 and power amplifier 210. During communication operations, signal pickup 208 passes the broadcast transmit signal from power amplifier 210 to optional circulator 206 and transmission antenna 14. Signal pickup 208 also passes a portion of the broadcast transmit signal, e.g., a local reference signal, to attenuation/gain component 212. The local reference signal can be used in the receive portion of reader 12 as part of a cancellation signal, such as adjusted local reference signal where one or more signal characteristics, e.g., the amplitude and phase of the local reference signal, are adjusted.

Attenuation/gain component 212 is configured to adjust one signal characteristic, e.g., the amplitude of the local reference signal to generate a cancellation signal, such as an adjusted local reference signal. In other words, attenuation/gain component 212 provides a signal correction factor, e.g., amplitude correction factor, for use in generating a cancellation signal of signal canceller 200. In this embodiment, the attenuation/gain component 212 is an electronic device that reduces the amplitude or power of local reference signal without appreciably distorting its waveform.

In addition, canceller module 200 includes phase shifter 214, which provides an adjustment to another signal characteristic, e.g., the phase of the local reference signal, in order to generate a cancellation signal to cancel the leakage signal of the reflected transmit signal of the transmit section when the cancellation signal and the receive signal are combined in the summer 220. In other words, phase shifter 214 also provides a signal correction factor, e.g., a phase correction factor, for use in generating the cancellation signal of signal canceller 200. The received or responsive signal at antenna 14 e.g., a modulated backscatter signal, also known as a reflected signal, can be passed through a band pass filter ("BPF") 204 that functions to filter or eliminate out-of-phase noise on the received signal. A second BPF 222 can be provided between the circulator 206 and the signal-summer 220. The second BPF 222 provides further filtering of the reflected receive signal. The summer 220 functions to combine the, receive signal and the cancellation signal to eliminate, cancel or minimize the, reflected transmit signal and thereby improve the sensitivity of reader 12 by isolating the transmit section and the receive section of reader 12. The summer 220 can be implemented as a series of RF devices, a directional coupler having a low loss, a combiner having a low loss or similar RF devices, In addition, summer 220 can be an integrated circuit or a resistive arrangement.

Canceller module 200 further includes detector circuit 218, which is positioned in the receive path between summer 220 and signal processor 216, e.g., a digital signal processor ("DSP"). Detector circuit 218 operates to measure the amplitude and phase of the local reference signal and the reflected receive signal and report this information to signal processor 216 for processing. In one embodiment, detector circuit 218 is a received signal strength indication ("RSSI") detector, which is configured to measure the strength of the received radio signal. Signal processor 216 in turn controls attenuation/gain component 212 and phase shifter 214 to adjust the gain and phase of the cancellation signal, e.g., adjusted local reference signal to minimize or "zero out" the reflected receive signal, while maintaining a backscatter receive signal from remote communication devices 16.

In one embodiment, the signal processor 216 may implement an error minimization algorithm to adjust the gain and phase of the cancellation signal used to minimize the unwanted reflected receive signal. The minimization algorithm may be similar to a least mean square ("LMS") or signal equalizer procedure. LMS is known to minimize the expectation of the squared residual with the smallest operations (per iteration), but it requires a large number of iterations to converge. In this matter, the signal canceller may operate in a "phase locked loop" ("PLL") mode to reduce or eliminate the reflected RF signal while maintaining the backscatter receive signal from the communication devices 16.

For example, during a transmission from the reader 12, the transmit RF signal may have signal strength in the range of 30 to 35 dBm at the port of the signal pick-up component 208 and a reflected RF signal may be approximately 20 dBm. The magnitude, frequency and phase of the reflected RF signal are measured and provided to the signal processor 216 which uses this data to provide a cancellation signal to nullify or cancel out the reflected RF signal while maintaining the backscatter receive signal received from communication devices 16.

In another embodiment the attenuation/gain component 212 and the phase shifter 214 may be fixed in the design by using a signal delay component and an amount of direct coupling. Alternatively, an adjustable setting that is configured at manufacturing may be implemented to provide sufficient correction or minimization of the reflected receive signal for fixed antennas and to a lesser extent, for removable antennas.

In one embodiment, the corrected and filtered backscatter receive signal can be provided at an input port of a frequency mixer 230. The frequency mixer 230 converts RF power at one frequency into power at another frequency. This allows amplification of the received signal at a frequency other than the RF frequency. In this illustrated embodiment, the backscatter receive RF signal and a local oscillator ("LO") signal are sinusoids and the output of mixer 230 is the sum and the difference frequencies of these two input signals. The output of mixer 230 will therefore be an intermediate frequency ("IF"). Typically either the sum frequency or the difference frequency is removed with a filter. [Please provide at least a preferred embodiment/numerical example of the input sinusoidal wave forms and related amplitude and phase. In addition, one or more graphs illustrating the waveforms received in the receive section of the reader and the resulting signal after canceller module operation would be helpful].

In one embodiment, the signals transmitted and received by reader 12 and signals transmitted and received by communication device 16 are modulated spread spectrum signals, and reader 12 transmits a command that is spread around a certain center frequency (e.g., 2.44 GHz). After the reader 12 transmits the command and is expecting a response, the reader 12 switches to a continuous wave ("CW") mode for backscatter communications. In the continuous wave mode, reader 12 does not transmit any information. Instead, reader 12 transmits a radio frequency continuous wave signal. In the described embodiment, the continuous wave signal has a radio frequency 2.44 GHz carrier signal. In other words, the continuous wave signal transmitted by reader 12 is not modulated. After communication device 16 receives the forward link communication from reader 12, communication device 16 processes the command.

If communication device 16 is operating in a backscatter mode, communication device 16 modulates the continuous wave signal providing a modulated continuous wave signal to communicate return link communication 17 responsive to reception of forward communication signal 15. Communication device 16 may modulate the continuous wave signal according to a subcarrier or modulation signal. Modulation by device 16 includes selective reflection of the continuous wave signal. In particular, device 16 alternately reflects or does not reflect the continuous wave signal from the reader 12 to send its reply. Alternatively, communication device 16 can communicate in an active mode.

The modulated continuous wave signal communicated from device 16 has a carrier component and multiple sideband components about the carrier component resulting from the modulation. More specifically, the modulated continuous wave signal output from device 16 includes a radio frequency continuous wave signal having a first frequency (e.g., 2.44 GHz), also referred to as a carrier component, and a subcarrier modulation signal having a different frequency (e.g., 600 kHz) and which provides the side band components. In this embodiment, the reader 12 receives the reflected and modulated signal with receive antenna 228.

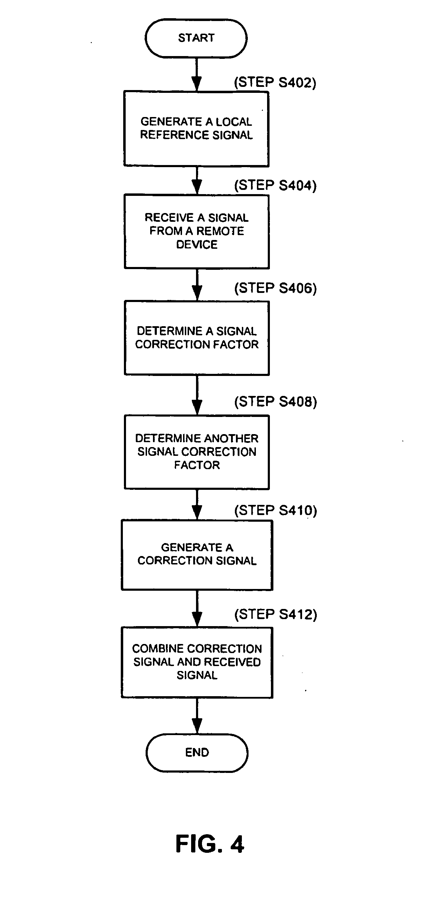

An exemplary mode of operation of an embodiment of the canceller module 200 of reader 12 is discussed with reference to the flowchart of FIG. 4. In step S402, a signal pickup 208 generates a local reference signal by passing a portion of a broadcast transmit signal to attenuation/gain component 212. A receive antenna 228 is configurable to receive a modulated response signal from a remote communication device 16 (step S404). Based on the received signal strength or its signal amplitude, a first signal correction factor, e.g., an amplitude correction factor, for the local reference signal is determined (step S406). In addition, at step S408, a second signal correction factor, e.g., a phase correction factor is determined with respect to the phase of the received signal from remote communication device 16. At step S410, the first correction factor and the second correction factor are applied to the local reference signal to generate a cancellation signal that will share a carrier frequency with the received signal and will approximately match the amplitude of the receive signal. Moreover, the phase correction factor can be determined or calculated to cancel, minimize or "zero out" the reflected portion of the received signal that relates to the transmit section/path of reader 12, while maintaining a backscatter receive signal from the remote communication devices 16. Accordingly, once the amplitude and phase of the cancellation signal are determined, the adjusted cancellation signal and the modulated received signal are combined by a summer 220 to minimize the leakage of the broadcast transmit signal (step S412).

The present invention provides a system, device and method for an RFID reader having an accurate sensing circuit and a signal canceller.

The present,invention can be realized in hardware, software, or a combination of hardware and software. An implementation of the method and system of the present invention can be realized in a centralized fashion in one computer system or in a distributed fashion where different elements are spread across several interconnected computer systems. Any kind of computer system, or other apparatus adapted for carrying out the methods described herein, is suited to perform the functions described herein.

It will be appreciated by persons skilled in the art that the present invention is not limited to what has been particularly shown and described herein above. In addition, unless mention was made above to the contrary, it should be noted that all of the accompanying drawings are not to scale,

## Claims

1. A method for generating a cancellation signal in an RFID reader (12), the method comprising:
generating a Local reference signal from a broadcast transmit signal (15);
receiving a receive signal (17) from a remote device (16);
determining at least one signal correction factor; and
generating the cancellation signal by applying the at least one signal correction,factor to the local reference signal; and combining the correction signal and the receive signal (17) to minimize interference on the receive signal (17), wherein determining at least one signal correction factor includes an amplitude correction factor by using a digital signal processor (216) to execute an error minimization process and providing a detector circuit (218) positioned in the receive part between a summer (220) and a signal processor (216) to measure the amplitude of the local reference signal and the reflected receive signal and report this information to signal processor (216),
**characterized in that**
determining a signal correction factor includes evaluating the phase of the reflected receive signal as well as a phase shifter (214) providing an adjustment to the phase of the local reference signal in order to generate a cancellation signal to cancel a leakage signal of the reflected transmit signal of the transmit section when the cancellation signal and the receive signal are combined in the summer.

2. The method of claim 1, wherein the broadcast transmit signal (15) is one of a radio frequency (RP) signal and a RF continuous wave signal.

3. The method of claim 1, wherein the receive signal (17) is one of a modulated REF signal and a modulated RF continuous wave signal.

4. The methods of claim 1, wherein the at least one signal correction factor is one of an amplitude correction factor and a phase correction factor.

5. The method of claim 1, wherein the at least one signal correction factor includes an amplitude correction factor and a phase correction factor.

6. The method of claim 1, wherein determining at least one signal correction factor includes measuring one of an amplitude of the receive signal (17) and a phase of me receive signal (17).

7. The method of claim 1, wherein determining at least one signal correction factor includes determining an amplitude correction factor using a direct coupling component.

8. The method of claim 1, wherein determining at least one signal correction factor incudes determining a phase correction factor using a signal delay line component.

## Patentansprüche

1. Verfahren zum Erzeugen eines Auslöschungssignals in einem RFID-Lesegerät (12), das Verfahren umfassend:
Erzeugen eines lokalen Referenzsignals von einem Broadcast-Übertragungssignal (15);
Empfangen eines Empfangssignals (17) von einem Remote-Gerät (16);
Bestimmen mindestens eines Signalkorrekturfaktors; und
Erzeugen des Auslöschungssignals durch Anlegen des mindestens einen Signalkorrekturfaktors an das lokale Referenzsignal; und Kombinieren des Korrektursignals und des Empfangssignals (17), um die Interferenz auf dem Empfangssignal (17) zu minimieren, wobei das Bestimmen mindestens eines Signalkorrekturfaktors einen Amplitudenkorrekturfaktor beinhaltet, indem ein digitaler Signalprozessor (216) benutzt wird zur Ausführung eines Fehlerminimierungsverfahrens und zum Bereitstellen einer im Empfangsteil zwischen einem Summator (220) und einem Signalprozessor (216) angebrachten Detektorschaltung (218) zum Messen der Amplitude des lokalen Referenzsignals und des reflektierten Empfangssignals und zum Melden dieser Information an den Signalprozessor (216),
**dadurch gekennzeichnet, dass**
das Bestimmen eines Signalkorrekturfaktors das Auswerten der Phase des reflektierten Empfangssignals sowie eines Phasenschiebers (214), das Bereitstellen einer Angleichung an die Phase des lokalen Referenzsignals zur Erzeugung eines Auslöschungssignals beinhaltet, um ein Lecksignal des reflektierten Übertragungssignals des Übertragungsabschnitts auszulöschen, wenn das Auslöschungssignal und das Empfangssignal im Summator kombiniert werden.

2. Verfahren nach Anspruch 1, wobei das Broadcast-Übertragungssignal (15) eines von einem Radiofrequenz-(RP)-signal und einem kontinuierlichen RF-Wellensignal ist.

3. Verfahren nach Anspruch 1, wobei das Empfangssignal (17) eines von einem modulierten RF-Signal und einem modulierten kontinuierlichen RF-Wellensignal ist.

4. Verfahren nach Anspruch 1, wobei der mindestens eine Signalkorrekturfaktor einer von einem Amplitudenkorrekturfaktor und einem Phasenkorrekturfaktor ist.

5. Verfahren nach Anspruch 1, wobei der mindestens eine Signalkorrekturfaktor einen Amplitudenkorrekturfaktor und einen Phasenkorrekturfaktor beinhaltet.

6. Verfahren nach Anspruch 1, wobei das Bestimmen mindestens eines Signalkorrekturfaktors das Messen eines von einer Amplitude des Empfangssignals (17) und einer Phase des Empfangssignals (17) beinhaltet.

7. Verfahren nach Anspruch 1, wobei das Bestimmen mindestens eines Signalkorrekturfaktors das Bestimmen eines Amplitudenkorrekturfaktors unter Benutzen einer direkten Kupplungskomponente beinhaltet.

8. Verfahren nach Anspruch 1, wobei das Bestimmen mindestens eines Signalkorrekturfaktors das Bestimmen eines Phasenkorrekturfaktors unter Benutzen einer Signalverzögerungsleitungskomponente einschließt.

## Revendications

1. Procédé pour produire un signal d'annulation dans un lecteur RFID (12), ledit procédé comprenant :
la production d'un signal de référence local à partir d'un signal de transmission diffusé (15);
la réception d'un signal de réception (17) d'un appareil à distance (16);
la détermination d'au moins un facteur de correction de signal ; et
la production dudit signal d'annulation en appliquant l'au moins un facteur de correction de signal au signal de référence local; et l'association du signal de correction et du signal de réception (17) afin de minimiser une interférence sur le signal de réception (17), dans lequel la détermination d'au moins un facteur de correction de signal inclut un facteur de correction d'amplitude utilisant un processeur de signal numérique (216) pour exécuter un processus de minimisation de l'erreur et pour fournir un circuit détecteur (218) placé dans la partie réception entre un totaliseur (220) et un processeur de signal (216) afin de mesurer l'amplitude du signal de référence local et du signal de réception réfléchi, et de rapporter ces informations au processeur de signal (216)
**caractérisé en ce que**
la détermination d'un facteur de correction de signal comporte une évaluation de la phase du signal de réception réfléchi, ainsi qu'un déphaseur (214) fournissant un ajustement à la phase du signal de référence local afin de produire un signal d'annulation pour annuler une fuite de signaux du signal de transmission réfléchi de la section transmission lorsque le signal d'annulation et le signal de réception sont combinés dans le totaliseur.

2. Procédé de la revendication 1, dans lequel le signal d'émission de diffusion (15) est l'un d'un signal radio fréquence (RP) et d'un signal RF en ondes continues.

3. Procédé de la revendication 1, dans lequel le signal de réception (17) est l'un d'un signal RF modulé et d'un signal RF modulé en ondes continues.

4. Procédé de la revendication 1, dans lequel l'au moins un facteur de correction de signal est l'un d'un facteur de correction d'amplitude et d'un facteur de correction de phase.

5. Procédé de la revendication 1, dans lequel l'au moins un facteur de correction de signal inclut un facteur de correction d'amplitude et un facteur de correction de phase.

6. Procédé de la revendication 1, dans lequel la détermination d'au moins un facteur de correction de signal inclut la mesure de l'une d'une amplitude du signal de réception (17) et d'une phase du signal de réception (17).

7. Procédé de la revendication 1, dans lequel la détermination d'au moins un facteur de correction de signal inclut la détermination d'un facteur de correction d'amplitude au moyen d'un composant de couplage direct.

8. Procédé de la revendication 1, dans lequel la détermination d'au moins un facteur de correction de signal inclut la détermination d'un facteur de correction de phase au moyen d'un composant en ligne de décalage de signal.
